# EUROPEAN PATENT SPECIFICATION

(11) **EP 4 141 608 B1**
(45) Date of publication and mention of the grant of the patent: **11.12.2024**
(21) Application number: 22192791.6
(22) Date of filing: 30.08.2022
(51) Int. Cl.: G05D 7/06, F16K 31/00

(54) **VALVE ARRANGEMENT AND METHOD FOR OPERATING A VALVE**
VENTILANORDNUNG UND VERFAHREN ZUM BETRIEB DES VENTILS
AGENCEMENT DE VALVE ET PROCÉDÉ DE FONCTIONNEMENT D'UNE VALVE

(30) Priority: 31.08.2021 DK PA202100847; 25.07.2022 WO PCT/EP2022/070810
(43) Date of publication of application: 01.03.2023
(73) Proprietor: Danfoss A/S, 6430 Nordborg (DK)
(72) Inventor: Osojnik, Matjaz, 6430 Nordborg (DK); Dolenc, Bostjan, 6430 Nordborg (DK); Nielsen, Claus Kongsgard, 6430 Nordborg (DK); Bogar, Sinisa, 6430 Nordborg (DK); Poljak, Matej, 6430 Nordborg (DK); Maticic, Matija, 6430 Nordborg (DK); Stepancic, Martin, 6430 Nordborg (DK); Muhic, Miran, 6430 Nordborg (DK)
(74) Representative: Keil & Schaafhausen Patentanwälte PartGmbB

(56) References cited:
- US-A1- 2015 057 816
- US-A1- 2019 018 432
- US-A1- 2020 026 311
- US-A1- 2020 348 704

## Description

The present invention relates to a valve arrangement and to a method for controlling such a valve arrangement.

US 2015/057816 A1 describes a flow-control valve system and a respective method. The method includes computing a plurality of iso-curves in a non-transitory computer media associated with an electronic controller. An external control signal is provided to an electronic controller, which translates this signal to a desired flow rate based on the original iso-curve and automatically establishes a flow rate set point based on any desired variable such as temperature. The flow control valve system controls a flow of fluid through a conduit irrespective of system pressure fluctuations and particular flow characteristics of the system. It uses a flow metering control valve, which uses electronic software to control algorithms to model the behavior of a conventional mechanical pressure-independent control valve.

US 2019/0018732 A1 describes a control gain automation having a valve assembly. The valve assembly includes a valve body with a fluid path extending between the inlet port and the outlet port, a valve member with a closed position blocking the fluid path and an open position, a sensor and an actuator, wherein the actuator is coupled to the valve member. A controller controls the actuator using a set point value and a default flow rate indicating of nominal flow through the fluid path. The controller communicates with the sensor, calculates the flow rate and compares the flow rate to a threshold value indicative of substantial zero flow rate. If the measure of the flow rate is below the threshold value, a position of the valve member is calculated directly from the set point value and the default flow rate. A control signal is produced from the calculated position and communicated to the control signal to the actuator.

A valve arrangement is used to control a flow of a fluid through a pipe or another fluid conducting system. The flow through the valve arrangement depends basically on the pressure over the valve arrangement and on the opening degree. The higher the pressure and the larger the opening degree, the larger is the flow.

In many cases a precise control of the flow is required. In such a case it is known to determine in advance a relation between the opening degree of the valve arrangement and a desired flow. Such a relation can be represented by a basic characteristic curve. The basic characteristic curve represents a relation between the flow and the opening degree. Thus, when a specific set-value of the flow is given, the valve arrangement is adjusted to the opening degree which according to the basic characteristic curve belongs to this set-point flow. The basic characteristic curve may have different forms and can be, for example, linear, equal percentage, square root, modified parabolic, hyperbolic, etc.

Unfortunately, the actual flow or flow rate through the valve arrangement does not always correspond to the flow set-value although the opening degree of the valve arrangement corresponding to the flow set-value has been adjusted. To increase accuracy in such a case, it is known to connect the valve to a flow sensor to correct the setting, i.e. the valve arrangement is part of a closed loop control and can respond to the differences between the flow set-value and the actual flow in real time. This, however, increases significantly the power consumption and wear of a valve arrangement due to repeated adjustments.

It is also possible to perform a calibration which is based on changing the actuator to control according to another of a plural of characteristic curves which is stored in control means at periodical intervals, when the actual flow which is measured does not correspond to the flow set-value. This has the disadvantage, that the respective characteristic curve may not be the most suitable over the whole range of valve opening degrees.

The object underlying the invention is to increase the flow accuracy over a valve arrangement without feedback in a simple manner.

This object is solved with a valve arrangement according to claim 1.

Inter alia, the valve arrangement comprises a flow control section having a basic characteristic curve representing a relation between a flow and an opening degree of the flow control section, a pressure control section keeping constant a pressure over the flow control section, control means having a flow set-value input and controlling an opening degree of the flow control section depending on a flow set-value received via the flow set-value input, and a flow meter measuring an actual value of flow through the flow control section, wherein the basic characteristic curve is modified by the control means to become a modified characteristic curve when a difference between the flow set-value and the actual value of the flow exceeds a predetermined threshold value.

In this case the pressure difference over the flow control section is kept constant. Thus, one parameter determining the flow through the valve arrangement is kept constant, so that changes of the pressure over the valve arrangement can no longer influence the actual flow through the valve arrangement. Furthermore, a flow, i.e. the actual flow, through the valve arrangement is measured and compared to the flow set-point, so that it is possible to detect whether the actual opening degree of the flow control section leads to the desired flow. If this in not the case, the basic characteristic curve of the flow control section is readjusted, so that the flow control section is operated according to a modified characteristic curve. However, such an adjustment is not made permanently, but only when the difference between the flow set-value and the actual flow exceeds a predetermined threshold value. Thus, the opening degree of the valve adjustment is only sometimes readjusted.

In an embodiment of the invention the valve arrangement comprises a timer initiating a comparison between the flow set-value and the actual value of the flow at predetermined time intervals. Thus, the comparison between the flow set-value and the actual value of the flow is not made permanently, but only from time to time. This again saves energy and reduces wear, since the chances that the valve arrangement has to be readjusted are again lowered.

In an embodiment of the invention the modified characteristic curve is a function of the basic characteristic curve. In other words, the modified characteristic curve is derived from the basic characteristic curve. It is not necessary to again completely calibrate the valve arrangement or the flow section of the valve arrangement.

In an embodiment of the invention the control means determine a factor representing a relation between the flow set-value and the actual value of the flow and modifies the characteristic curve to the modified characteristic curve using the factor. This is a simple way to modify the basic characteristic curve to the modified characteristic curve. In this case it is assumed that at least for a part of the basic characteristic curve around the flow set-value the opening degree of the flow control section and the flow set-value are related by the same function, so that a simple factor is sufficient to modify the basic characteristic curve to the modified characteristic curve.

In an embodiment of the invention the modified characteristic curve is obtained by multiplying the basic characteristic curve by the factor. The basic characteristic curve is represented by a number of pairs of values. One value of each pair is the opening degree and the other value is the flow. It is for example possible to multiply in each pair of values the flow with the factor to obtain the modified characteristic curve.

In an embodiment of the invention the basic characteristic curve is modified by the control means only in a section of the basic characteristic curve, wherein the set-value belongs to this section. Such a way is in particular of advantage when the basic characteristic curve is a non-linear curve. In this case the non-linearity can be taken into account, so that the basic characteristic curve is only modified in the neighbourhood of the flow set-value.

The control means comprise a storage storing data of the basic characteristic curve. The control means may change data stored in the storage to obtain the modified characteristic curve. As mentioned above, the basic characteristic curve can be represented by a number of pairs of values. The corresponding values can be stored in the storage. This is a simple way to replace some of the values by other values to obtain the modified characteristic curve.

In an embodiment of the invention the basic characteristic curve is a linear or non-linear curve. A linear curve has a constant slope. A non-linear curve can basically be of any kind, for example, equal percentage, square root, modified parabolic, hyperbolic, n'th power or n'th root, logarithmic, exponential etc. In all cases it is possible to modify the basic characteristic curve when the actual flow does not correspond to the flow set-value.

In an embodiment of the invention the modified characteristic curve is obtained by changing a slope of the basic characteristic curve. When the basic characteristic curve is a linear curve, the slope is changed for the whole curve. When the basic characteristic curve is a non-linear curve, the slope of the curve can be changed for each curve section, even for each incremental curve section.

In an embodiment of the invention the control means comprises an actuator and a controller, the controller operating the actuator. The actuator is a mechanical drive for a valve of the flow section. The controller can be part of the actuator or it can be arranged remote from the actuator. In the last case, it can be connected to the actuator by a signal line or wireless.

The object is further solved with a method with the features of claim 11 for operating a valve arrangement by controlling an opening degree in dependency of a flow set-value, wherein a relation between the opening degree and the flow set-value is represented by a basic characteristic curve.

Inter alia, the valve arrangement comprises a flow control section and a pressure control section with which a pressure over the flow control section is kept constant, wherein the flow set-value is inputted and an actual flow through the flow section is measured, wherein the basic characteristic curve is modified to become a modified characteristic curve when a difference between the flow set-value and the actual value of the flow exceeds a predetermined threshold value.

Again, in this method the pressure drop over the flow control section is kept constant to remove the influence of varying pressures over the valve arrangement to the flow. Furthermore, a readjustment is made only when the difference between the flow set-value and the actual value of the flow exceeds the predetermined threshold value. Thus, the occurrences of a readjustment are kept low.

In an embodiment of the invention the modified characteristic curve is a function of the basic characteristic curve. In other words, the basic characteristic curve is not obtained by recalibrating the valve, but only by changing the basic characteristic curve.

In an embodiment of the invention the flow set-value and the actual value of the flow are compared at predetermined time intervals. Thus, such a comparison does not take place permanently, but only at the predetermined time intervals. This again keeps the occurrences of a readjustment low.

In an embodiment of the invention a factor representing a relation between the set-value and the actual value is determined and the basic characteristic curve is modified to the modified characteristic curve using the factor. As described above, the factor can be, for example, multiplied with values of the basic characteristic curve to obtain the modified characteristic curve.

In an embodiment of the invention the modified characteristic curve is obtained by changing a slope of the basic characteristic curve. This is a simple way to obtain the basic characteristic curve in particular when using a linear basic characteristic curve.

A preferred embodiment of the invention will now be described with reference to the drawing, in which:
- Fig. 1: shows schematically a valve arrangement,
- Fig. 2: shows schematically control means of the valve arrangement and
- Fig. 3: shows a way to obtain a modified characteristic curve from a basic characteristic curve.

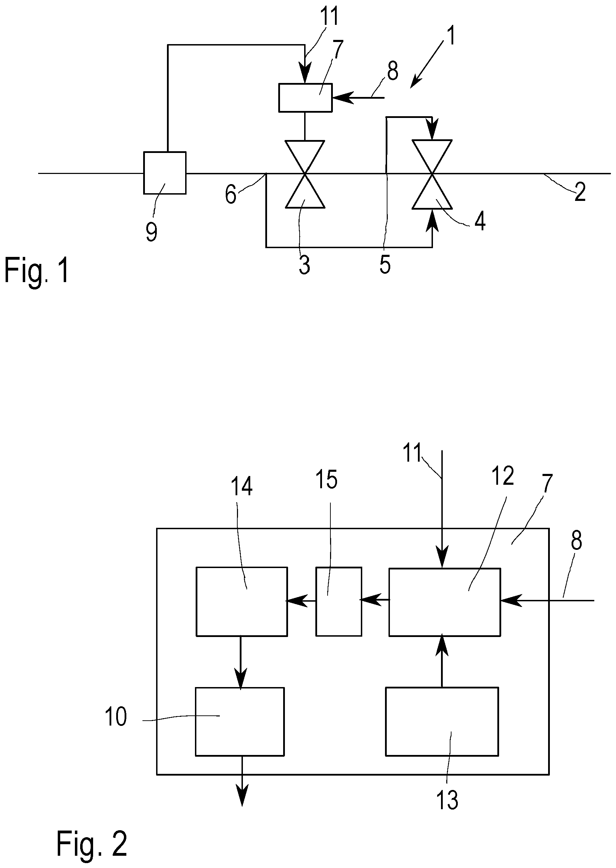

Fig. 1 shows schematically a valve arrangement 1 mounted in a flow conduit 2 for controlling the fluid flow through said conduit 2. The conduit 2 could form part of a heating and/or cooling system including heat exchanging devices such as radiators, floor heating systems, fluid-to-fluid heat exchangers etc. The conduit 2 may connect to such a heat exchanging device as supply or return conduit of fluid.

The valve arrangement 1 comprises a flow control section 3 and a pressure control section 4. The pressure control section 4 keeps constant a pressure over the flow control section 3. The pressure control section is in the preferred embodiment a mechanical unit (using no electrical power) with a valve, valve seat and a diaphragm/membrane. The pressures in the points 6 and 5 in the conduit 2 are working on each side of the diaphragm and the diaphragm is connected together with the valve element and thus controlling the distance between the valve element and the valve seat as for example described in EP1652014 or EP3486691. To this end the pressure control section 4 is connected to a point 5 upstream the flow control section 3 in the conduit 2 and to a point 6 downstream the flow control section 3 in the conduit 2.

The flow control section 3 comprises a valve which is operated by control means 7 having a flow set-value input 8. The control means 7 control an opening degree of the flow control section using a flow set-value inputted via the flow set-value input as parameter.

A flow meter 9 is arranged in the conduit 2 measuring an actual value of flow through the conduit 2 and thus through the flow control section 3.

The control means 7 are shown with more details in Fig. 2.

The control means 7 comprise an actuator 10 which is the part influencing the opening degree of the flow control section 3.

In a simple way, the opening degree of the flow section 3 is determined by a distance between a valve element and a valve seat of the valve of the flow control section 3, as it is known in the art. It is also possible, to use a valve which is completely open over a fraction of a time period and completely closed over the remaining fraction of the time period. In this case the opening degree of the flow valve section 3 is determined by the duty cycle of opening and closing.

In the present example the actuator 10 is shown as part integrated into the control means 7. However, the actuator 10 can be arranged remote from the control means 7. In this case a connection between the actuator 10 and the control means 7 can be made by means of a signal line or wireless.

The flow meter 9 is connected to the control means 7 via an actual value input 11. Thus, the control means 7 have the information about the intended value (via the set-value input 8) and the actual value (via the actual value input 11).

These two values are compared in a comparator 12. However, such a comparison in the comparator 12 is made only from time to time. The times at which such a comparison is made in the comparator 12 is given by a timer 13 defining predetermined time intervals. These time intervals can be all the same or they can be different depending on the intended use of the valve arrangement.

The comparison in the comparator 12 is made in two steps. In a first step, a difference between the flow set-value and the actual value of the flow is determined. In a second step it is checked whether this difference exceeds a predetermined threshold value. Only, when the difference between the flow set-value and the actual value of the flow exceeds this predetermined threshold value, further steps are necessary.

The control means 7 comprise a storage 14 in which a relation between a flow set-value and an opening degree of the flow control section 3 is stored. The storage 14 can be in form of a look-up table. However, other kinds of storage are possible as well, for example, the storage can be a function generator generating for each input a specific output. Thus, the information stored in the storage 14 can simply be named "characteristic curve". In the initial condition of the valve arrangement 1 the storage 14 shows a "basic characteristic curve". The basic characteristic curve is the relation between a flow set-value and an opening degree of the flow control section 3, so that the storage 14 can transmit a corresponding signal to the actuator 10 once it receives a flow set-value.

When the evaluation of the flow set-value and the actual value of the flow shows that the actual value does not match the flow set-value, a correction is necessary.

To this end, the basic characteristic curve in the storage 14 is replaced by a modified characteristic curve. The modified characteristic curve is then available from the storage 14. The modified characteristic curve is a function of a basic characteristic curve, i.e. the basic characteristic curve is only slightly modified. It is not necessary to recalibrate the whole valve arrangement. In an example the control means 7, in particular the comparator 12, determines a factor representing a relation between the flow set-value and the actual value of the flow. The basic characteristic curve is modified using this factor. The modified characteristic curve can be obtained, for example, by multiplying the basic characteristic curve by the factor.

When, for example, the basic characteristic curve is stored in form of a look-up table, the opening degrees belonging to each of the flow set-values are multiplied with the factor.

This amendment of the basic characteristic curve to obtain the modified characteristic curve can be made, for example, by means of a controller 15 receiving output signals of the comparator 12 and modifying the characteristic curve in the storage 14.

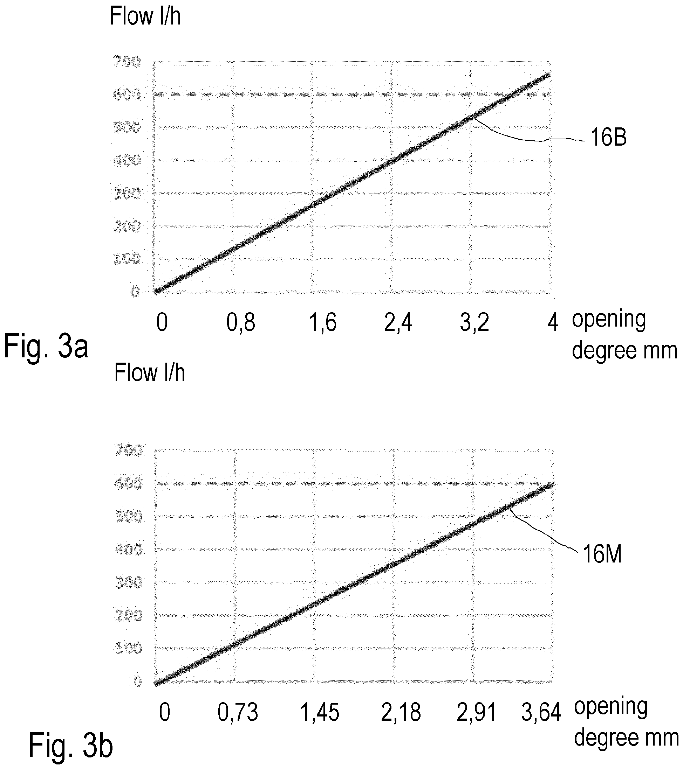

Fig. 3 shows an example for modifying a basic characteristic curve 16B (Fig. 3a) to a modified characteristic curve 16M (Fig. 3b). In this case both characteristic curves are linear curves. This example is chosen to make the explanation simple. However, also non-linear characteristic curves can be modified in the same or similar manner.

Fig. 3a shows that the basic characteristic curve 16B would - for a flow set-value of 600l/h - require an opening degree of the flow control section of 4 mm. However, with an opening degree of 4 mm the actual flow is 660 I/h.

When such a difference remains for more than a predetermined time, for example more than 3 minutes, and it is larger than a predetermined difference of ± 5 %, then the controller 15 is activated and modifies the basic characteristic curve 16B to the modified characteristic curve 16M. To this end the controller 15 calculates a factor as so called "correction factor" by dividing the flow set-value by the actual flow, i.e. 600/660 = 0,909. The controller 15 multiplies the opening degree in the storage 14 of 4 mm by the factor 0,909 and obtains - for a flow set-value of 600 I/h - an opening degree of 3,64 mm.

It can be seen that for lower flow set-values the opening degree is reduced accordingly.

If the basic characteristic curve is just given by a function (without storing specific values) the modification can be simply to change the slope of the basic characteristic curve 16B to obtain the modified characteristic curve 16M.

If a non-linear characteristic curve is used, the modification can be limited to a certain section of the basic characteristic curve.

In the example mentioned above the predetermined threshold value which must be exceeded by the difference between the flow set-value and the actual value of the flow has been defined in percentage of the flow set-value. It is, however, also possible to define the predetermined threshold value in an absolute size.

The flow sensor 9 can be arranged upstream or downstream the flow control section 3.

Typical kinds of flow meters 9 include obstruction types, turbine types, electromagnetic, positive-displacement flow meters, fluid dynamic, vortex shedding, anemometers, ultrasonic or Coriolis forces types etc. It should be noted that even the storage means 14 can be arranged outside the control means 7.

## Claims

1. Valve arrangement (1) comprising
a flow control section (3) comprising a valve operated by a control means (7),
the control means (7) having a flow set-value input (8), wherein the control means (7) comprises a memory (14) storing data of a basic characteristic curve (16B), wherein the basic characteristic curve (16B) represents a relation between a flow and an opening degree of the flow control section (3) and wherein the control means (7) is configured to control the opening degree of the flow control section (3) depending on a flow set-value received via the flow set-value input (8) using the flow set-value inputted via the flow set-value input (8) as parameter, and
a flow meter (9) measuring an actual value of flow through the flow control section (3),
wherein the basic characteristic curve (16B) is modified by the control means (7) to become a modified characteristic curve (16M) when a difference between the flow set-value and the actual value of the flow exceeds a predetermined threshold value,
**characterized in that** the valve arrangement (1) comprises a pressure control section (4) keeping constant a pressure difference over the flow control section (3)

2. Valve arrangement according to claim 1, **characterized in that** the valve arrangement (1) comprises a timer (13) initiating a comparison between the flow set-value and the actual value of the flow at predetermined time intervals.

3. Valve arrangement according to claim 1 or 2, **characterized in that** the modified characteristic curve (16M) is a function of the basic characteristic curve (16B).

4. Valve arrangement according to any of claims 1 to 3, **characterized in that** the control (7) means determine a factor representing a relation between the flow set-value and the actual value of the flow and modifies the basic characteristic curve (16B) to the modified characteristic curve (16M) using the factor.

5. Valve arrangement according to claim 4, **characterized in that** the modified characteristic curve (16M) is obtained by multiplying the basic characteristic curve (16B) with the factor.

6. Valve arrangement according to claim 1 to 5, **characterized in that** the basic characteristic curve (16B) is modified by the control means (7) only in a section of the basic characteristic curve (16B), wherein the flow set-value belongs to this section.

7. Valve arrangement according to any of claims 1 to 6, **characterized in that** the control means (7) changes data stored in the storage (14) to obtain the modified characteristic curve (16M) and/or
that the basic characteristic curve (16B) of the flow control section (3) is readjusted so that that flow control section (3) is operated according to the modified characteristic curve (16M) when a difference between the flow set-value and the actual value of the flow exceeds a predetermined threshold value.

8. Valve arrangement according to any of claims 1 to 7, **characterized in that** the basic characteristic curve (16B) is a linear or non-linear curve.

9. Valve arrangement according to claim 8, **characterized in that** in the modified characteristic curve (16M) is obtained by changing a slope of the basic characteristic curve (16B).

10. Valve arrangement according to any of claims 1 to 9, **characterized in that** the control means (7) comprise an actuator (10) and a controller (15), the controller (15) operating the actuator.

11. Method for operating a valve arrangement (1) by controlling an opening degree in dependency of a flow set-value, wherein a relation between the opening degree and the flow set-value is represented by a basic characteristic curve (16B), wherein the valve arrangement (1) comprises a flow control section (3) comprising a valve operated by a control means (7) of the valve arrangement (1), wherein the control means (7) comprises a flow set-value input (8) and a memory (14) storing data of the basic characteristic curve (16B),
wherein the flow set-value is inputted via the flow set-value input (8) and the control means (7) controls the opening degree of the flow control section (3) depending on the flow set-value received via the flow set-value input (8) using the flow set-value inputted as parameter, and wherein an actual flow through the flow section is measured, wherein the basic characteristic curve (16B) is modified to become a modified characteristic curve (16M) when a difference between the flow set-value and the actual value of the flow exceeds a predetermined threshold value,
**characterized in that** the valve arrangement (1) comprises a pressure control section (4) with which a pressure difference over the flow control section (3) is kept constant.

12. Method according to claim 11, **characterized in that** the modified characteristic curve (16M) is a function of the basic characteristic curve (16B).

13. Method according to claim 11 or 12, **characterized in that** the flow set-value and the actual value of the flow are compared at predetermined time intervals.

14. Method according to any of claims 11 to 13, **characterized in that** a factor representing a relation between the set-value and the actual value is determined and the basic characteristic curve (16B) is modified to the modified characteristic curve (16M) using the factor.

15. Method according to any of claims 11 to 14, **characterized in that** the modified characteristic curve (16M) is obtained by changing a slope of the basic characteristic curve (16B).

## Patentansprüche

1. Ventilanordnung (1), umfassend
einen Durchflusssteuerungsabschnitt (3), umfassend ein Ventil, das durch ein Steuerungsmittel (7) betätigt wird, wobei das Steuerungsmittel (7) einen Durchflusssollwerteingang (8) aufweist, wobei das Steuerungsmittel (7) einen Speicher (14) umfasst, der Daten einer Basiskennlinie (16B) speichert, wobei die Basiskennlinie (16B) einen Zusammenhang zwischen einem Durchfluss und einem Öffnungsgrad des Durchflusssteuerungsabschnitts (3) darstellt und wobei das Steuerungsmittel (7) dazu ausgelegt ist, den Öffnungsgrad des Durchflusssteuerungsabschnitts (3) in Abhängigkeit von einem über den Durchflusssollwerteingang (8) empfangenen Durchflusssollwert unter Verwendung des über den Durchflusssollwerteingang (8) eingegebenen Durchflusssollwerts als Parameter zu steuern, und
einen Durchflussmesser (9), der den Istwert des Durchflusses durch den Durchflusssteuerungsabschnitt (3) misst,
wobei die Basiskennlinie (16B) durch das Steuerungsmittel (7) modifiziert wird, um zu einer modifizierten Kennlinie (16M) zu werden, wenn eine Differenz zwischen dem Durchflusssollwert und dem Durchflussistwert einen vorbestimmten Schwellenwert überschreitet,
**dadurch gekennzeichnet, dass** die Ventilanordnung (1) einen Drucksteuerungsabschnitt (4) umfasst, der eine Druckdifferenz über dem Durchflusssteuerungsabschnitt (3) konstant hält.

2. Ventilanordnung nach Anspruch 1, **dadurch gekennzeichnet, dass** die Ventilanordnung (1) einen Zeitgeber (13) umfasst, der in vorbestimmten Zeitintervallen einen Vergleich zwischen dem Durchflusssollwert und dem Durchflussistwert auslöst.

3. Ventilanordnung nach Anspruch 1 oder 2, **dadurch gekennzeichnet, dass** die modifizierte Kennlinie (16M) eine Funktion der Basiskennlinie (16B) ist.

4. Ventilanordnung nach einem der Ansprüche 1 bis 3, **dadurch gekennzeichnet, dass** das Steuerungsmittel (7) einen Faktor bestimmt, der einen Zusammenhang zwischen dem Durchflusssollwert und dem Durchflussistwert darstellt, und unter Verwendung des Faktors die Basiskennlinie (16B) zur modifizierten Kennlinie (16M) modifiziert.

5. Ventilanordnung nach Anspruch 4, **dadurch gekennzeichnet, dass** die modifizierte Kennlinie (16M) durch Multiplikation der Basiskennlinie (16B) mit dem Faktor erhalten wird.

6. Ventilanordnung nach einem der Ansprüche 1 bis 5, **dadurch gekennzeichnet, dass** die Basiskennlinie (16B) durch das Steuerungsmittel (7) nur in einem Abschnitt der Basiskennlinie (16B) modifiziert wird, wobei der Durchflusssollwert zu diesem Abschnitt gehört.

7. Ventilanordnung nach einem der Ansprüche 1 bis 6, **dadurch gekennzeichnet, dass** das Steuerungsmittel (7) im Speicher (14) gespeicherte Daten zum Erhalten der modifizierten Kennlinie (16M) verändert und/oder dass die Basiskennlinie (16B) des Durchflusssteuerungsabschnitts (3) so angepasst wird, dass der Durchflusssteuerungsabschnitt (3) gemäß der modifizierten Kennlinie (16M) betrieben wird, wenn eine Differenz zwischen dem Durchflusssollwert und dem Durchflussistwert einen vorbestimmten Schwellenwert überschreitet.

8. Ventilanordnung nach einem der Ansprüche 1 bis 7, **dadurch gekennzeichnet, dass** die Basiskennlinie (16B) eine lineare oder nichtlineare Kurve ist.

9. Ventilanordnung nach Anspruch 8, **dadurch gekennzeichnet, dass** die modifizierte Kennlinie (16M) durch Änderung einer Steigung der Basiskennlinie (16B) erhalten wird.

10. Ventilanordnung nach einem der Ansprüche 1 bis 9, **dadurch gekennzeichnet, dass** das Steuerungsmittels (7) ein Stellglied (10) und eine Steuervorrichtung (15) umfasst, wobei die Steuervorrichtung (15) das Stellglied betätigt.

11. Verfahren zum Betreiben einer Ventilanordnung (1) durch Steuern eines Öffnungsgrades in Abhängigkeit von einem Durchflusssollwert, wobei ein Zusammenhang zwischen dem Öffnungsgrad und dem Durchflusssollwert durch eine Basiskennlinie (16B) dargestellt wird, wobei die Ventilanordnung (1) einen Durchflusssteuerungsabschnitt (3) aufweist, der ein Ventil umfasst, das durch ein Steuerungsmittel (7) der Ventilanordnung (1) betätigt wird, wobei das Steuerungsmittel (7) einen Durchflusssollwerteingang (8) und einen Speicher (14) umfasst, der Daten der Basiskennlinie (16B) speichert, wobei der Durchflusssollwert über den Durchflusssollwerteingang (8) eingegeben wird und das Steuerungsmittel (7) den Öffnungsgrad des Durchflusssteuerungsabschnitts (3) in Abhängigkeit von dem über den Durchflusssollwerteingang (8) empfangenen Durchflusssollwert unter Verwendung des als Parameter eingegebenen Durchflusssollwerts steuert, und wobei ein Istdurchfluss durch den Durchflussabschnitt gemessen wird, wobei die Basiskennlinie (16B) modifiziert wird, um eine modifizierte Kennlinie (16M) zu werden, wenn eine Differenz zwischen dem Durchflusssollwert und dem Istwert des Durchflusses einen vorbestimmten Schwellenwert überschreitet,
**dadurch gekennzeichnet, dass** die Ventilanordnung (1) einen Drucksteuerungsabschnitt (4) umfasst, mit dem eine Druckdifferenz über den Durchflusssteuerungsabschnitt (3) konstant gehalten wird.

12. Verfahren nach Anspruch 11, **dadurch gekennzeichnet, dass** die modifizierte Kennlinie (16M) eine Funktion der Basiskennlinie (16B) ist.

13. Verfahren nach Anspruch 11 oder 12, **dadurch gekennzeichnet, dass** der Durchflusssollwert und der Durchflussistwert in vorbestimmten Zeitintervallen verglichen werden.

14. Verfahren nach einem der Ansprüche 11 bis 13, **dadurch gekennzeichnet, dass** ein Faktor, der einen Zusammenhang zwischen dem Sollwert und dem Istwert darstellt, bestimmt wird und die Basiskennlinie (16B) unter Verwendung des Faktors zur modifizierten Kennlinie (16M) modifiziert wird.

15. Verfahren nach einem der Ansprüche 11 bis 14, **dadurch gekennzeichnet, dass** die modifizierte Kennlinie (16M) durch Änderung einer Steigung der Basiskennlinie (16B) erhalten wird.

## Revendications

1. Agencement de valve (1) comprenant
une section de régulation de débit (3) comprenant une valve actionnée par un moyen de commande (7), le moyen de commande (7) ayant une entrée de valeur de consigne de débit (8), le moyen de commande (7) comprenant une mémoire (14) stockant les données d'une courbe caractéristique de base (16B), la courbe caractéristique de base (16B) représentant une relation entre un débit et un degré d'ouverture de la section de régulation de débit (3) et le moyen de commande (7) étant conçu pour commander le degré d'ouverture de la section de régulation de débit (3) en fonction d'une valeur de consigne de débit reçue par l'intermédiaire de l'entrée de valeur de consigne de débit (8) en utilisant la valeur de consigne de débit entrée par l'intermédiaire de l'entrée de valeur de consigne de débit (8) en tant que paramètre, et
un débitmètre (9) mesurant la valeur réelle de débit à travers la section de régulation de débit (3),
la courbe caractéristique de base (16B) étant modifiée par le moyen de commande (7) pour devenir une courbe caractéristique modifiée (16M) lorsqu'une différence entre la valeur de consigne de débit et la valeur réelle du débit dépasse une valeur seuil prédéfinie,
**caractérisé en ce que** l'agencement de valve (1) comprend une section de commande de pression (4) qui maintient constante une différence de pression par rapport à la section de régulation de débit (3).

2. Agencement de valve selon la revendication 1, **caractérisé en ce que** l'agencement de valve (1) comprend une minuterie (13) déclenchant une comparaison entre la valeur de consigne de débit et la valeur réelle du débit à des intervalles de temps prédéfinis.

3. Agencement de valve selon la revendication 1 ou 2, **caractérisé en ce que** la courbe caractéristique modifiée (16M) est une fonction de la courbe caractéristique de base (16B).

4. Agencement de valve selon l'une quelconque des revendications 1 à 3, **caractérisé en ce que** le moyen de commande (7) détermine un facteur représentant une relation entre la valeur de consigne de débit et la valeur réelle du débit et modifie la courbe caractéristique de base (16B) en courbe caractéristique modifiée (16M) à l'aide du facteur.

5. Agencement de valve selon la revendication 4, **caractérisé en ce que** la courbe caractéristique modifiée (16M) est obtenue en multipliant la courbe caractéristique de base (16B) par le facteur.

6. Agencement de valve selon les revendications 1 à 5, **caractérisé en ce que** la courbe caractéristique de base (16B) est modifiée par le moyen de commande (7) uniquement dans une section de la courbe caractéristique de base (16B), la valeur de consigne de débit appartenant à cette section.

7. Agencement de valve selon l'une quelconque des revendications 1 à 6, **caractérisé en ce que** le moyen de commande (7) modifie les données stockées dans la mémoire (14) pour obtenir la courbe caractéristique modifiée (16M) et/ou
**en ce que** la courbe caractéristique de base (16B) de la section de régulation de débit (3) est réajustée de sorte que cette section de régulation de débit (3) fonctionne selon la courbe caractéristique modifiée (16M) lorsqu'une différence entre la valeur de consigne de débit et la valeur réelle du débit dépasse une valeur seuil prédéfinie.

8. Agencement de valve selon l'une quelconque des revendications 1 à 7, **caractérisé en ce que** la courbe caractéristique de base (16B) est une courbe linéaire ou non linéaire.

9. Agencement de valve selon la revendication 8, **caractérisé en ce que** la courbe caractéristique modifiée (16M) est obtenue en changeant une pente de la courbe caractéristique de base (16B).

10. Agencement de valve selon l'une quelconque des revendications 1 à 9, **caractérisé en ce que** le moyen de commande (7) comprend un actionneur (10) et un dispositif de commande (15), le dispositif de commande (15) actionnant l'actionneur.

11. Procédé de fonctionnement d'un agencement de valve (1) en commandant un degré d'ouverture en fonction d'une valeur de consigne de débit, une relation entre le degré d'ouverture et la valeur de consigne de débit étant représentée par une courbe caractéristique de base (16B), l'agencement de valve (1) comprenant une section de commande de débit (3) comprenant une valve actionnée par un moyen de commande (7) de l'agencement de valve (1), le moyen de commande (7) comprenant une entrée de valeur de consigne de débit (8) et une mémoire (14) stockant des données de la courbe caractéristique de base (16B),
la valeur de consigne de débit étant entrée par l'intermédiaire de l'entrée de valeur de consigne de débit (8) et le moyen de commande (7) commandant le degré d'ouverture de la section de régulation de débit (3) en fonction de la valeur de consigne de débit reçue par l'entrée de valeur de consigne de débit (8) en utilisant la valeur de consigne de débit entrée comme paramètre, et un débit réel à travers la section de débit étant mesuré, la courbe caractéristique de base (16B) étant modifiée pour devenir une courbe caractéristique modifiée (16M) lorsqu'une différence entre la valeur de consigne de débit et la valeur réelle du débit dépasse une valeur seuil prédéfinie,
**caractérisé en ce que** l'agencement de valve (1) comprend une section de commande de pression (4) avec laquelle une différence de pression sur la section de régulation de débit (3) est maintenue constante.

12. Procédé selon la revendication 11, **caractérisé en ce que** la courbe caractéristique modifiée (16M) est une fonction de la courbe caractéristique de base (16B).

13. Procédé selon la revendication 11 ou 12, **caractérisé en ce que** la valeur de consigne de débit et la valeur réelle du débit sont comparées à des intervalles de temps prédéfinis.

14. Procédé selon l'une quelconque des revendications 11 à 13, **caractérisé en ce qu'**un facteur représentant une relation entre la valeur de consigne et la valeur réelle est déterminé et la courbe caractéristique de base (16B) est modifiée en courbe caractéristique modifiée (16M) à l'aide du facteur.

15. Procédé selon l'une quelconque des revendications 11 à 14, **caractérisé en ce que** la courbe caractéristique modifiée (16M) est obtenue en modifiant une pente de la courbe caractéristique de base (16B).
